# EUROPÄISCHE PATENTSCHRIFT

(11) **EP 2 637 536 B1**
(45) Veröffentlichungstag und Bekanntmachung des Hinweises auf die Patenterteilung: **09.09.2015**
(21) Anmeldenummer: 11778869.5
(22) Anmeldetag: 02.11.2011
(51) Int. Cl.: A47J 31/44, A47J 31/52

(54) **HEISSGETRÄNKEZUBEREITUNGSVORRICHTUNG MIT DATENÜBERTRAGUNGSEINRICHTUNG**
HOT BEVERAGE PREPARATION DEVICE COMPRISING A DATA TRANSMISSION UNIT
DISPOSITIF DE PRÉPARATION DE BOISSONS CHAUDES DOTÉ D'UN ÉQUIPEMENT DE TRANSMISSION DE DONNÉES

(30) Priorität: 12.11.2010 DE 102010043858
(43) Veröffentlichungstag der Anmeldung: 18.09.2013
(73) Patentinhaber: BSH Hausgeräte GmbH, 81739 München (DE)
(72) Erfinder: AIGNER, Ralf, 83361 Kienberg (DE); HOECK, Florian, 83334 Inzell (DE); STROBL, Robert, 83246 Unterwössen (DE)
(86) Internationale Anmeldenummer: PCT/EP2011/069223
(87) Internationale Veröffentlichungsnummer: WO 2012/062629

(56) Entgegenhaltungen:
- EP-A1- 2 073 160
- EP-A2- 1 302 138
- EP-A2- 1 491 121
- US-A1- 2008 308 628
- US-A1- 2009 240 598

## Beschreibung

Die Erfindung betrifft eine Heißgetränkezubereitungsvorrichtung, insbesondere einen Kaffeevollautomaten, die in einem Normalbetriebsmodus zur Heißgetränkezubereitung und in einem Datenübertragungsmodus zur Übertragung von Daten zu einem Empfangsgerät ausgebildet ist.

Heißgetränkezubereitungsvorrichtungen, wie z. B. Kaffeevollautomaten, weisen einen internen Fehlerspeicher auf, um Abweichungen von Betriebsparametern und Fehlerfälle während des Betriebs zu speichern. In einem Fehlerfall, der den Betrieb der Heißgetränkezubereitungsvorrichtung beeinträchtigt oder gar blockiert, wird eine Bedienperson durch eine Statusinformatien (z. B. ein Display) darüber informiert. Je nach Ursache der Meldung kann die Bedienperson den Fehler entweder selber beheben oder wird dazu aufgefordert, den Kundendienst zu informieren. Der Kundendienst kann z. B. über eine Serviceschnittstelle der Heißgetränkezubereitungsvorrichtung den Fehlerspeicher auslesen (EP 1 302 138 A2). Alternativ erscheint im Display eine Meldung, den Kundendienst anzurufen und die im Display angezeigte Fehlernummer bzw. den - code mitzuteilen. In diesem Fall kann der Kundendienst entweder eine Telefonberatung zur Fehlerbehebung durch die Bedienperson durchführen, die defekte Heißgetränkezubereitungsvorrichtung abholen lassen oder einen Mitarbeiter vor Ort schicken. Die Möglichkeiten zur Fehlerdiagnose mittels Telefon sind allerdings immer vom technischen Verständnis und der Hilfsbereitschaft der Bedienperson abhängig. Ist die Heißgetränkezubereitungsvorrichtung beim Kundendienst oder dieser vor Ort, kann er sich durch Auslesen des Fehlerspeichers ein genaues Bild der Fehlerursache machen. Hierzu benötigt er allerdings einen Laptop und ein Diagnosetool für den Anschluss an die Heißgetränkezubereitungsvorrichtung.

Die EP 2073160 A1 beschreibt ein Terminal eines Leistungserbringers, das Daten mit Informationen bezüglich einer Zahlung einer Leistung als mehrdimensionalen Barcode kodiert.

Die EP 1491121 A2 beschreibt eine Steuerung und ein Verfahren zum Abschalten von ausgewählten Funktionen, sofern sie nicht durch benutzerspezifische Codes freigeschalten werden.

In der US 2009/0240598 A1 wird eine Methode zu Erfassung und Bezahlung durch Einlesen eines grafischen Codes durch ein Mobilgerät offenbart.

US 2008/0308628 A1 offenbart ein System zur gezielten Übertragung von Information an Benutzer eines mobilen Gerätes.

Es ist daher Aufgabe der Erfindung, die Ermittlung der Fehlerursache zu vereinfachen.

Diese Aufgabe wird bei einer Heißgerätezubereitungsvorrichtung der eingangs genannten Art dadurch gelöst, dass eine Codierungseinrichtung zur Codierung der Daten zu wenigstens einem codierten Datensatz in einen maschinenlesbaren Code und eine Anzeigeeinrichtung zum Anzeigen des codierten Datensatzes vorgesehen sind. Die Codierung des Datensatzes in einen maschinenlesbaren Code erlaubt eine unmittelbare Weiterleitung und Verarbeitung der im Datensatz enthaltenen Informationen, ohne dass eine Bedienperson dazwischen geschaltet sein muss, um einen Fehlercode weiterzuleiten oder zu interpretieren. Dies reduziert Übertragungsfehler, wie sie bei einer manuellen Übertragung auftreten können. Sie verfolgt vielmehr das Prinzip, einen maschinenlesbar codierten Datensatz zu erzeugen und auszugeben, der direkt von Empfangsgeräten verarbeitet werden kann, die dann z. B. in verständlicher Form eine Fehlerursache benennen. Außerdem können so auch umgekehrt z. B. durch Softwareupdates der Empfangsgeräte im Bedarfsfall auf einfache Weise weitere Informationen bereitgestellt werden, die z. B. weitere Fehlerquellen betreffen, die nach der Produkteinführung erst während der Produktlaufdauer auftreten.

Nach einer vorteilhaften Ausgestaltung der Erfindung ist der codierte Datensatz mit einem graphischen Code, insbesondere einem 2D-Code, codiert. Es wird also ein z. B. optoelektronisch lesbarer 2D-Code oder 2D-Barcode verwendet, der aus unterschiedlich breiten Strichen oder Punkten sowie dazwischen liegenden Lücken besteht. Die Daten des Datensatzes sind in Form einer Fläche über zwei Dimensionen codiert, was es erlaubt, eine höhere Informationsdichte pro Flächeneinheit zu erreichen. Derartige Codes können mit Empfangsgeräten, die optische Lesegeräte, wie Kamera-Scanner, aufweisen, eingelesen werden. Es kann sich bei den Empfangsgeräten um Mobiltelefone, insbesondere um Smartphones handeln.

Die Daten im codierten Datensatz können in einer vorteilhaften Ausgestaltung der Erfindung in Matrixform, eindimensional in mehreren Zeilen oder in Kreisringen angeordnet sein. So können als Codes z. B. gestapelte Codes wie Codablock, Code 49, PDF417 oder Matrixcodes wie QR-Code, DataMatrix, MaxiCode, Aztec-Code verwendet werden.

Nach einer weiteren, vorteilhaften Ausgestaltung der Erfindung können die Daten Messwerte von Sensoren der Heißgetränkezubereitungsvorrichtung und/oder ihre Fehlfunktionen kennzeichnende Fehlercodes und/oder Betriebsparameter der Heißgerätezubereitungsvorrichtung sein. Dies erlaubt es, die Funktion von den Sensoren auf einfache Weise, d. h. ohne Demontage der Heißgetränkezubereitungsvorrichtung, zu überprüfen. Bei den Sensoren kann es sich beispielsweise um Sensoren zur Erfassung der Durchflussmenge, der Temperatur, der elektrischen Spannung oder des elektrischen Stromes zur Erfassung von Füllständen mit Betriebsmitteln, wie zum Beispiel Wasser, handeln. Somit ist eine einfache Überprüfung der Funktionsfähigkeit der Sensoren gegeben. Durch die Übertragung von Fehlercodes, die bestimmte Fehlfunktionen der Heißgetränkezubereitungsvorrichtung bezeichnen, wird die Diagnose im Fehlerfall weiter vereinfacht. Hierzu wird die Selbstdiagnosefähigkeit der Heißgetränkezubereitungsvorrichtung verwendet, die es erlaubt, Fehlfunktionen, zum Beispiel aufgrund eines Ausfalls eines Bauteils, mittels einer Steuerung der Heißgetränkezubereitungsvorrichtung zu erfassen und einen entsprechenden Fehlercode zuzuordnen. Mit der Übertragung von Betriebsparametern, wie zum Beispiel der Anzahl von Brühzyklen, der Durchflussmenge, der Anzahl der Entkalkungen, ausgelesenen Barcodes von Getränkezubereitungskapseln und/oder der zubereiteten Heißgetränke, können Daten darüber übermittelt werden, wie lange die letzte Wartung zurückliegt bzw. welchen Belastungen die Heißgetränkezubereitungsvorrichtung ausgesetzt war. Somit können bei Bedarf eine Vielzahl von Daten zur Verfügung gestellt werden, die eine genaue Diagnose von Fehlerursachen erlauben.

Nach einer weiteren, vorteilhaften Ausgestaltung der Erfindung kann der codierte Datensatz eine Empfängeradresse enthalten. Bei der Empfängeradresse kann es sich um eine eMail-Adresse, eine Telefonnummer zum Empfang z. B. einer SMS, einen Link zur Herstellung einer Internetverbindung oder eine vCard mit den Informationen Name, Telefonnummer, eMail-Adresse handeln. Dies erlaubt eine automatische Weiterleitung zum Kundendienst, insbesondere unter Zuhilfenahme entsprechender Empfangsgeräte, ohne dass eine Bedienperson diese Kontaktdaten ermitteln muss.

Nach einer weiteren, vorteilhaften Ausgestaltung der Erfindung kann der codierte Datensatz zum mobile tagging verwendbar sein. Hierbei wird mit einem Empfangsgerät ein codierter Datensatz ausgelesen. Anschließend entschlüsselt eine Lese-Software bzw. ein Reader des Empfangsgeräts den codierten Datensatz und leitet entschlüsselte Daten an die im codierten Datensatz enthaltene Webadresse oder Servicetelefonnummer, z. B. zum Empfang einer SMS.

Es entfällt das manuelle und damit fehleranfällige Übertragen der Webadresse oder Servicetelefonnummer.

Dies vereinfacht die Kontaktaufnahme zum Kundendienst, da so die umständliche Eingabe einer Internetadresse oder Servicetelefonnummer entfällt, weil diese Informationen bereits im codierten Datensatz enthalten sind und das Empfangsgerät z. B. durch ein entsprechendes Softwaremodul zur Verarbeitung dieser Informationen eingerichtet ist. Ferner ist so auf einfache Weise eine Aktualisierung von Internetadressen und/oder Servicetelefonnummern nach einer Änderung möglich, da diese aktualisierten Informationen im Softwaremodul hinterlegt werden und zugeordnet werden können. Somit entfällt die Notwendigkeit, diese Informationen in der Heißgetränkezubereitungsvorrichtung selbst zu aktualisieren.

Nach einer weiteren, vorteilhaften Ausgestaltung der Erfindung kann die Anzeigeeinrichtung ein Display sein. Mit einem derartigen Display, das über eine Vielzahl von in Zeilen und Reihen angeordneten Bildpunkten verfügt, die einzeln und unabhängig voneinander angesteuert werden können, ist es möglich, die codierten Datensätze anzuzeigen und zugleich im Nichtbedarfsfall das Display zu anderen Zwecken zu verwenden, wie der Anzeige anderer Betriebsparameter während des bestimmungsgemäßen Gebrauchs. Hierzu kann ein derartiges Display z. B. eine Mindestgröße von 177 x 177 Bildpunkten aufweisen.

Vorzugsweise ist das Display ein TFT-Display, sodass eine ausreichend kontrastreiche Wiedergabe der codierten Datensätze gewährleistet ist, um einen fehlerfreien Einlesevorgang zu ermöglichen.

Um die Datenmenge zu erhöhen, kann die Anzeigeeinrichtung vorzugsweise zum Anzeigen einer Mehrzahl von codierten Datensätzen in zeitlicher Reihenfolge ausgebildet sein. Dies erlaubt es, auch Displays mit einer Auflösung zu verwenden, die nicht ausreicht, um die erforderliche Datenmenge eines codierten Datensatzes zeitgleich anzuzeigen. In diesem Fall wird die Datenmenge auf mehrere Datensätze verteilt, die nacheinander mit dem Display zur Anzeige gebracht werden.

Außerdem weist die Heißgetränkezubereitungsvorrichtung vorzugsweise einen Datenspeicher zum Speichern von Messwerten von Sensoren der Heißgetränkezubereitungsvorrichtung und/oder ihre Fehlfunktionen kennzeichnende Fehlercodes und/oder Betriebsparameter der Heißgerätezubereitungsvorrichtung auf. Der Datenspeicher erlaubt so die Anzeige von mehreren Datensätzen in einer zeitlichen Reihenfolge nacheinander, die nacheinander entsprechend der maximal anzeigbaren Datenmenge codiert werden.

Im Folgenden wird das Prinzip der Erfindung anhand einer Zeichnung beispielhaft noch näher erläutert. In der Zeichnung zeigen:

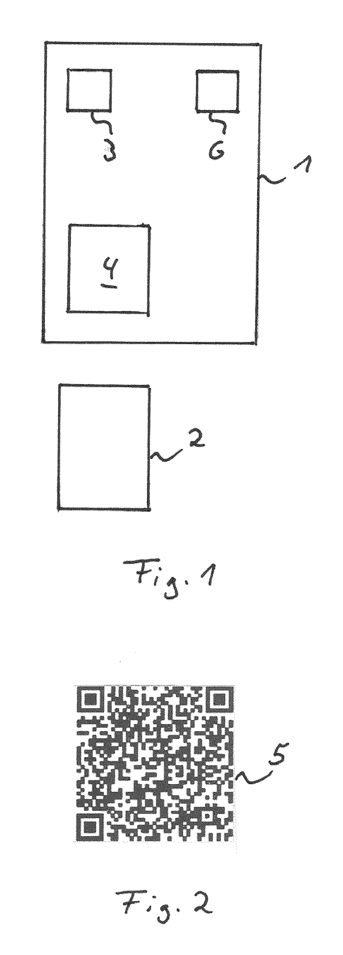

- Fig. 1: eine schematische Darstellung eines ersten Ausführungsbeispiels einer erfindungsgemäßen Heißgetränkezubereitungsvorrichtung in Verbindung mit einem Empfangsgerät, und
- Fig. 2: eine schematische Darstellung eines codierten Datensatzes.

Als ein Ausführungsbeispiel für eine Heißgetränkezubereitungsvorrichtung ist ein Kaffeevollautomat 1 dargestellt. Zur Bedienung des Kaffeevollautomaten 1 durch eine Bedienperson sind Bedienmittel (nicht dargestellt) zum Ein- und Ausschalten des Kaffeevollautomaten 1 sowie zur Betriebsprogrammauswahl eines Betriebsprogramms zur Zubereitung eines bestimmten Heißgetränks, wie zum Beispiel Espresso, aus einer Mehrzahl von Betriebsprogrammen zur Zubereitung verschiedener Heißgetränke vorgesehen.

Der Kaffeevollautomat 1 weist eine Anzeigeeinrichtung 4 auf, im vorliegenden Ausführungsbeispiel ein TFT-Display. Das TFT-Display kann einer Bedienperson z. B. die Auswahl eines Betriebsprogramms und dann den Fortschritt bei der Zubereitung eines Heißgetränks in diesem Normalbetriebsmodus anzeigen.

Wenn jedoch eine Steuerung (nicht dargestellt) des Kaffeevollautomaten 1, die verschiedene Aggregate des Kaffeevollautomaten 1 während des Ablaufs des ausgewählten Betriebsprogramm ansteuert und überwacht, eine Fehlfunktion erfasst und darauf den Betriebsprogrammablauf stoppt, wird der Kaffeevollautomat 1 in einem Datenübertragungsmodus betrieben.

Im Datenübertragungsmodus erstellt eine Codiereinrichtung 3 des Kaffeevollautomaten 1 einen codierten Datensatz 5 aus den im Fehlerspeicher (nicht dargestellt) des Kaffeevollautomaten 1 abgespeicherten Daten. Hierzu wird der QR-Code verwendet. Neben Daten betreffend Messwerte von Sensoren der Heißgetränkezubereitungsvorrichtung und ihre Fehlfunktionen kennzeichnende Fehlercodes und Betriebsparameter der Heißgerätezubereitungsvorrichtung werden auch Daten codiert, die eine automatische Kontaktaufnahme mit dem Kundendienst ermöglichen, nämlich die Servicenummer des Kundendienstes, um eine automatisch generierte SMS weiterzuleiten.

Anschließend wird der codierte Datensatz 5 über Datenleitungen (nicht dargestellt) in einem Datenspeicher 6 des Kaffeevollautomaten 1 abgespeichert. In einem nächsten Schritt wird der codierte Datensatz 5 auf der Anzeigeeinrichtung 4 zur Anzeige gebracht.

Ein Empfangsgerät 2, das ausgebildet ist, derart optisch codierte Datensätze 5 einzulesen, liest den codierten Datensatz 5 ein und wertet ihn aus. Das Empfangsgerät 2 kann ein Mobiltelefon, wie z. B. ein Smartphone, sein und ein optisches Lesegerät, wie z. B. einen Kamera-Scanner, sowie entsprechende Software zur Verarbeitung dieser Daten, aufweisen. Das Empfangsgerät 2 kann automatisch eine SMS erzeugen, die den Kundendienst über den entsprechenden Fehler informiert, ohne dass die Bedienperson einen Fehlercode entziffern oder die Servicenummer des Kundendienstes ermitteln muss.

Wenn besonders große Datenmengen zur Anzeige gebracht werden müssen, wie z. B. Betriebsparameter, können mehrere codierte Datensätze 5 im Datenspeicher 6 abgespeichert werden und nacheinander auf der Anzeigeeinrichtung 4 zur Anzeige gebracht werden. Das Empfangsgerät 2 ist dann entsprechend zur Aufnahme und Verarbeitung mehrerer Datensätze 5 ausgebildet.

### Bezugszeichenliste

- 1: Kaffeevollautomat
- 2: Empfangsgerät
- 3: Codierungseinrichtung
- 4: Anzeigeeinrichtung
- 5: codierter Datensatz
- 6: Datenspeicher

## Patentansprüche

1. Heißgetränkezubereitungsvorrichtung, insbesondere Kaffeevollautomat (1), die in einem Normalbetriebsmodus zur Heißgetränkezubereitung und in einem Datenübertragungsmodus zur Übertragung von Daten zu einem Empfangsgerät (2) ausgebildet ist, mit einer Steuerung und mit einer Anzeigeeinrichtung (4) für eine Anzeige im Normalbetriebsmodus, mit einer Codierungseinrichtung (3) zur Codierung der Daten im Datenübertragungsmodus zu wenigstens einem codierten Datensatz (5) in einen maschinenlesbaren Code, **dadurch gekennzeichnet, dass** die Steuerung die Anzeigeeinrichtung (4) im Datenübertragungsmodus zum Anzeigen des codierten Datensatzes (5) ansteuert.

2. Heißgetränkezubereitungsvorrichtung nach Anspruch 1, **dadurch gekennzeichnet, dass** der codierten Datensatz (5) mit einem graphischen Code, insbesondere einem 2D-Code, codiert ist.

3. Heißgetränkezubereitungsvorrichtung nach Anspruch 1 oder 2, **dadurch gekennzeichnet, dass** die Daten des codierten Datensatzes (5) in Matrixform, eindimensional in mehreren Zeilen oder in Kreisringen angeordnet sind.

4. Heißgetränkezubereitungsvorrichtung nach Anspruch 1, 2 oder 3, **dadurch gekennzeichnet, dass** der codierte Datensatz (5) Messwerte von Sensoren der Heißgetränkezubereitungsvorrichtung und/oder ihre Fehlfunktionen kennzeichnende Fehlercodes und/oder Betriebsparameter der Heißgerätezubereitungsvorrichtung enthält.

5. Heißgetränkezubereitungsvorrichtung nach einem der Ansprüche 1 bis 4, **dadurch gekennzeichnet, dass** der codierte Datensatz (5) eine Empfängeradresse enthält.

6. Heißgetränkezubereitungsvorrichtung nach einem der Ansprüche 1 bis 5, **dadurch gekennzeichnet, dass** der codierte Datensatz (5) zum mobile tagging verwendbar ist.

7. Heißgetränkezubereitungsvorrichtung nach einem der Ansprüche 1 bis 6, **dadurch gekennzeichnet, dass** die Anzeigeeinrichtung (4) ein Display ist.

8. Heißgetränkezubereitungsvorrichtung nach Anspruch 7, **dadurch gekennzeichnet, dass** das Display ein TFT-Display ist.

9. Heißgetränkezubereitungsvorrichtung nach einem der Ansprüche 1 bis 8, **dadurch gekennzeichnet, dass** die Anzeigeeinrichtung (4) zum Anzeigen einer Mehrzahl von codierten Datensätzen (5) in zeitlicher Reihenfolge ausgebildet ist.

10. Heißgetränkezubereitungsvorrichtung nach einem der Ansprüche 1 bis 9, **dadurch gekennzeichnet, dass** die Heißgetränkezubereitungsvorrichtung einen Datenspeicher (6) zum Speichern von Messwerten von Sensoren der Heißgetränkezubereitungsvorrichtung und/oder ihre Fehlfunktionen kennzeichnende Fehlercodes und/oder Betriebsparameter der Heißgerätezubereitungsvorrichtung aufweist.

## Claims

1. Hot beverage preparation apparatus, in particular a fully automatic coffee maker (1), which is configured for preparing hot beverages in a normal operating mode and for transmitting data to a receiving device (2) in a data transmission mode, with a controller and with a display unit for display in the normal operating mode, with an encoding unit (3) for encoding the data in the data transmission mode to form at least one encoded data record (5) in a machine-readable code
**characterised in that**
the controller activates the display unit (4) in the data transmission mode for displaying the encoded data record (5).

2. Hot beverage preparation apparatus according to claim 1, **characterised in that** the encoded data record (5) is encoded using a graphic code, in particular a 2D code.

3. Hot beverage preparation apparatus according to claim 1 or 2, **characterised in that** the data of the encoded data record (5) is arranged in matrix form, one-dimensionally in a number of rows or in circles.

4. Hot beverage preparation apparatus according to claim 1, 2 or 3, **characterised in that** the encoded data record (5) contains measurement values from sensors of the hot beverage preparation apparatus and/or fault codes identifying its malfunctions and/or operating parameters of the hot beverage preparation apparatus.

5. Hot beverage preparation apparatus according to one of claims 1 to 4, **characterised in that** the encoded data record (5) contains a recipient address.

6. Hot beverage preparation apparatus according to one of claims 1 to 5, **characterised in that** the encoded data record (5) can be used for mobile tagging.

7. Hot beverage preparation apparatus according to one of claims 1 to 6, **characterised in that** the display unit (4) is a display.

8. Hot beverage preparation apparatus according to claim 7, **characterised in that** the display is a TFT display.

9. Hot beverage preparation apparatus according to one of claims 1 to 8, **characterised in that** the display unit (4) is configured to display a number of encoded data records (5) in time sequence.

10. Hot beverage preparation apparatus according to one of claims 1 to 9, **characterised in that** the hot beverage preparation apparatus has a data memory (6) for storing measurement values from sensors of the hot beverage preparation apparatus and/or fault codes identifying its malfunctions and/or operating parameters of the hot beverage preparation apparatus.

## Revendications

1. Dispositif de préparation de boissons chaudes, notamment machine à café entièrement automatique (1), qui, dans un mode de fonctionnement normal, est réalisé pour la préparation de boissons chaudes et, dans un mode de transfert de données, est réalisé pour la transmission de données à un appareil récepteur (2), comprenant un dispositif de commande et comprenant un dispositif d'affichage (4) pour un affichage en mode de fonctionnement normal, comprenant un dispositif de codage (3) pour le codage des données en mode de transmission de données en au moins un jeu de données codées (5) dans un code lisible par machine, **caractérisé en ce que** le dispositif de commande active le dispositif d'affichage (4) en mode de transfert de données pour afficher le jeu de données codées (5).

2. Dispositif de préparation de boissons chaudes selon la revendication 1, **caractérisé en ce que** le jeu de données codées (5) est codé au moyen d'un code graphique, notamment d'un code-barres 2D.

3. Dispositif de préparation de boissons chaudes selon la revendication 1 ou 2, **caractérisé en ce que** les données du jeu de données codées (5) sont disposées en forme de matrice, de manière unidimensionnelle sur plusieurs lignes ou dans des couronnes circulaires.

4. Dispositif de préparation de boissons chaudes selon la revendication 1, 2 ou 3, **caractérisé en ce que** le jeu de données codées (5) contient des valeurs de mesure de capteurs du dispositif de préparation de boissons chaudes et/ou leurs codes d'erreur caractérisant des fonctions défaillantes et/ou des paramètres de fonctionnement du dispositif de préparation de boissons chaudes.

5. Dispositif de préparation de boissons chaudes selon l'une quelconque des revendications 1 à 4, **caractérisé en ce que** le jeu de données codées (5) contient une adresse de récepteur.

6. Dispositif de préparation de boissons chaudes selon l'une quelconque des revendications 1 à 5, **caractérisé en ce que** le jeu de données codées (5) est utilisable pour le tagging mobile.

7. Dispositif de préparation de boissons chaudes selon l'une quelconque des revendications 1 à 6, **caractérisé en ce que** le dispositif d'affichage (4) est un écran.

8. Dispositif de préparation de boissons chaudes selon la revendication 7, **caractérisé en ce que** l'écran est un écran TFT.

9. Dispositif de préparation de boissons chaudes selon l'une quelconque des revendications 1 à 8, **caractérisé en ce que** le dispositif d'affichage (4) est réalisé pour afficher une pluralité de jeux de données codées (5) en ordre chronologique.

10. Dispositif de préparation de boissons chaudes selon l'une quelconque des revendications 1 à 9, **caractérisé en ce que** le dispositif de préparation de boissons chaudes présente une mémoire de données (6) pour mémoriser les valeurs de mesure de capteurs du dispositif de préparation de boissons chaudes et/ou leur codes d'erreur caractérisant des fonctions défaillantes et/ou des paramètres de fonctionnement du dispositif de préparation de boissons chaudes.
